Europäisches Patentamt

European Patent Office

Office européen des brevets

(19)

(11) Veröffentlichungsnummer: **0 426 097 A2**

(12) **EUROPÄISCHE PATENTANMELDUNG**

(21) Anmeldenummer: 90120773.8

(22) Anmeldetag: 30.10.90

(51) Int. Cl.⁵: **B27B 5/32**, B24B 45/00, B23Q 3/12

(30) Priorität: 03.11.89 DE 3936631

(43) Veröffentlichungstag der Anmeldung:
08.05.91 Patentblatt 91/19

(84) Benannte Vertragsstaaten:
CH DE FR GB IT LI SE

(71) Anmelder: Ledermann GmbH
Stadionstrasse 2-2a
W-7240 Horb am Neckar(DE)

(72) Erfinder: Katz, Otto
Hohenzollernring 18
W-7240 Horb a. N. 1 -Bildechingen(DE)

(74) Vertreter: Jackisch, Walter, Dipl.-Ing. et al
Menzelstrasse 40
W-7000 Stuttgart 1(DE)

(54) **Werkzeugträger für Rotationswerkzeuge, insbesondere Kreissägeblätter, Zerspaner usw.**

(57) Die Erfindung betrifft einen Werkzeugträger für Rotationswerkzeuge, insbesondere Kreissägeblätter, Zerspaner usw. Werkzeugträger für Rotationswerkzeuge besitzen im allgemeinen eine Spannvorrichtung, mittels welcher ein Werkzeug an einer Flanschfläche des Werkzeugträgers befestigt ist. Das Werkzeug hat eine zentrale Öffnung, in die ein Ansatz des Werkzeugträgers eingreift. Da sowohl bei der Herstellung des Werkzeugträgers oder auch des Werkzeugs und durch häufige Montage und Demontage Toleranzen an der zentralen Öffnung und/oder am Ansatz des Werkzeugträgers auftreten können, kann die Rundlaufgenauigkeit beeinträchtigt werden. Um dies zu vermeiden, wird vorgeschlagen, zwischen dem Ansatz (8) des Werkzeugträgers (1) und dem Werkzeug (6) einen Zentrierring (9) anzuordnen. Die Erfindung wird vorzugsweise bei Rotationswerkzeugen, wie beispielsweise Kreissägen, benutzt.

Fig.1

EP 0 426 097 A2

# WERKZEUGTRÄGER FÜR ROTATIONSWERKZEUGE, INSBESONDERE KREISSÄGEBLÄTTER, ZERSPANER USW.

Die Erfindung bezieht sich auf einen Werkzeugträger für Rotationswerkzeuge der im Oberbegriff des Anspruchs 1 angegebenen Gattung.

Aus der DE-PS 23 20 919 ist eine Schnellwechsel-Spannvorrichtung für Rotationswerkzeuge bekannt mit einem Werkzeugträger, der mindestens ein in Richtung der Werkzeugachse federbelastetes Spannelement aufweist. Mittels dieses Spannelementes wird das Werkzeug formschlüssig gehalten und gegen eine Flanschfläche des Werkzeugträgers gepreßt. Das Werkzeug weist eine zentrische Bohrung auf, in die ein Ansatz am Werkzeugträger eingreift. Diese Schnellwechsel-Spannvorrichtung hat sich in der Praxis gut bewährt. Es kann jedoch bei der Herstellung des Werkzeugträgers oder des Werkzeugs oder auch durch häufiges Montieren und Demontieren des Werkzeugs vom Werkzeugträger zu Toleranzen zwischen Ansatz und zentraler Öffnung kommen, so daß eine gewünscht hohe Rundlaufgenauigkeit nicht mehr gewährleistet ist.

Es ist daher die Aufgabe der vorliegenden Erfindung, einen Werkzeugträger für Rotationswerkzeuge der eingangs genannten Art derart weiterzubilden, daß auftretende Toleranzen mit Sicherheit ausgeglichen werden und dadurch eine stets hohe Rundlaufgenauigkeit gewährleistet ist.

Diese Aufgabe wird bei einem Werkzeugträger der genannten Art durch die kennzeichnenden Merkmale des Anspruchs 1 gelöst. Die wesentlichen Vorteile der Erfindung sind darin zu sehen, daß beim Anbringen des Werkzeugs am Werkzeugträger eine Selbstzentrierung erfolgt, wobei die möglicherweise vorhandenen Toleranzen durch den Zentrierring eliminiert werden. Zum Ausgleich der Toleranzen ist der Zentrierring vorzugsweise elastisch ausgestaltet und/oder elastisch gelagert. Um ein Aufpressen des Werkzeugs auf dem Ansatz des Werkzeugträgers zu vermeiden, ist es zweckmäßig, daß der Zentrierring begrenzt axial verschieblich gelagert ist.

Eine erste Ausführungsform des axial verschieblich gelagerten Zentrierringes besteht darin, daß dieser auf einem zylindrischen Abschnitt des Werkzeugträgers angeordnet ist, wobei der Zentrierring auf seiner dem Werkzeugträger zugewandten Seite von mindestens einer Feder beaufschlagt und auf der anderen Seite von einem Sicherungsring gehalten ist. Ein derart gelagerter Zentrierring ist vorzugsweise mit einer konischen Mantelfläche versehen oder mit einer in axialer Richtung gerundeten Form ausgeführt, wobei die zentrale Öffnung des Werkzeugs konisch und mit einem zur Flanschfläche des Werkzeugträgers hin öffnenden Konuswinkel gestaltet ist. Hierbei ist sowohl die Gestaltung der Mantelfläche des Zentrierringes als auch die Form der zentralen Öffnung besonders geeignet, um eine Selbstzentrierung zu erreichen.

Eine Ausführungsvariante der Anordnung des Zentrierrings besteht darin, daß dieser in der zentralen Öffnung des Werkzeugs angeordnet ist, wobei der Zentrierring in Richtung auf den Werkzeugträger von mindestens einem geeigneten elastischen Element, vorzugsweise einer Feder, beaufschlagt und der axiale Verschiebeweg in ähnlicher Weise durch ein elastisches Element, vorzugsweise einen Sicherungsring oder einen O-Ring bzw. Gewindestift oder dgl., begrenzt ist. Bei einer solchen Ausführung ist es zweckmäßig, daß der Zentrierring eine konische Bohrung mit zur Flanschfläche hin öffnendem Konuswinkel aufweist und der Werkzeugträger einen konischen Vorsprung besitzt, der in den Zentrierring eingreift. Im Prinzip bildet diese Anordnung die spiegelbildliche Anordnung der Lagerung des Zentrierringes, und zwar in diesem Fall an dem Werkzeug, wobei jedoch das Prinzip der beiden konischen Flächen, die in selbstzentrierender Weise zusammenwirken, unverändert bleibt.

Um dem Zentrierring auch in radialer Richtung eine gewisse Elastizität zu verleihen, ist dieser mit mindestens einem in axialer Richtung verlaufenden Schlitz versehen. Aufgrund dieses Schlitzes kann der Zentrierring bezüglich seines Außenumfangs in begrenztem Maß verkleinert werden. Als besonders günstig wird eine Anordnung angesehen, bei der im Zentrierring mehrere Schlitze vorhanden sind, die sich lediglich über eine Teillänge der Axiallänge des Zentrierringes erstrecken. Diese Schlitze sind vorzugsweise wechselseitig an der Vorderseite und der Rückseite des Zentrierringes angeordnet, und die Teillänge, über die sich die Schlitze erstrecken, ist größer als die Hälfte der Axiallänge des Zentrierringes. Hierdurch ergibt sich eine meanderförmige Mantelfläche des Zentrierringes, wodurch es möglich ist, den Ring über den gesamten Umfang gleichmäßig in seinem Durchmesser einzuschnüren. Wird keine Radialkraft auf den Zentrierring ausgeübt, so dehnt sich dieser auf das ursprüngliche Maß seines Durchmessers aus. Als Material für den Zentrierring ist Stahl besonders geeignet. Als die den Zentrierring abstützenden Federn können Schraubenfedern oder auch Tellerfedern eingesetzt werden.

Ausführungsbeispiele des erfindungsgemäßen Werkzeugträgers sind nachstehend anhand der Zeichnung näher erläutert. Es zeigen:

Fig. 1 einen Axialschnitt durch einen Werkzeugträger mit Selbstzentrierung für das Werkzeug;

Fig. 2 die Einzelheit X aus Fig. 1;
Fig. 3 eine Ausführungsvariante des Zentrierringes und
Fig. 4 ein Werkzeug mit Zentrierring.

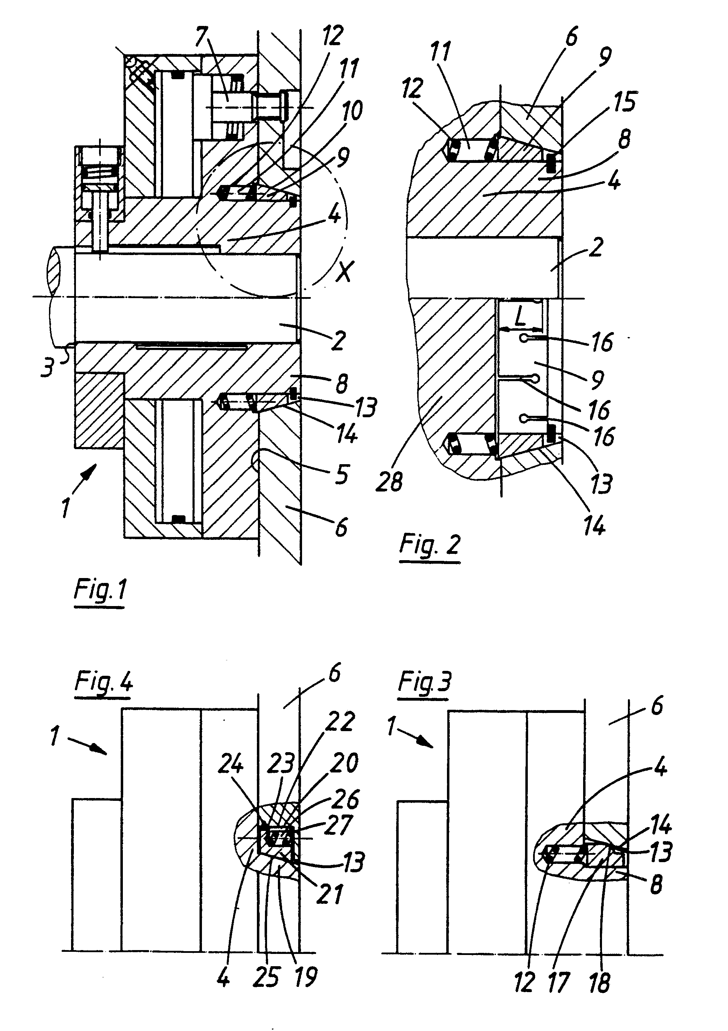

In Fig. 1 ist ein Werkzeugträger 1 dargestellt, der auf einer Antriebswelle 2 angeordnet ist. Die Antriebswelle 2 besitzt eine radiale Schulter 3, an der der Werkzeugträger 1 anliegt. Der Werkzeugträger 1 besteht im wesentlichen aus einem Nabenteil 4, das an einer Flanschfläche 5 ein Werkzeug 6, beispielsweise eine Zerspanerscheibe, ein Kreissägeblatt usw., aufnimmt und eine mehrere Spannelemente 7 umfassende Spanneinrichtung zum sicheren Festhalten des Werkzeugs 6 besitzt. Am radial inneren Ende der Flanschfläche 5 befindet sich auf einem zapfenförmigen Abschnitt 8 des Nadelteils 4 ein Zentrierring 9 mit konischer Mantelfläche 10. Der Zentrierring 9 ist auf dem zapfenförmigen Abschnitt 8 begrenzt gleitverschieblich gelagert und eine in einer Vertiefung 11 angeordnete Feder 12 belastet den Zentrierring 9 in Richtung auf das Werkzeug 6, das eine zentrale Öffnung 13 mit einer entsprechenden Gegenkonusfläche 14 besitzt.

In Fig. 2 ist das auf der Antriebswelle 2 befestigte Nabenteil 4 mit dem darauf befindlichen Zentrierring 9 gezeigt. Der im Axialschnitt keilförmige Zentrierring 9 wird an seiner dem Werkzeugträger 2 zugewandten Seite von der Feder 12 belastet, die sich in der Vertiefung 11 befindet. Damit bei dem Werkzeugwechsel, also beim Abnehmen des Werkzeugs 6, der Zentrierring 9 nicht von dem zylindrischen Abschnitt 8 rutscht, ist ein Sicherungsring 15 nahe des freien Endes des Abschnittes 8 vorgesehen. Wie aus der unteren Hälfte der Fig. 2 ersichtlich ist, weist der Zentrierring 9 mehrere axial verlaufende Schlitze 16 auf, die sich lediglich über eine Teillänge 1 der Axiallänge L des Zentrierringes 9 erstrecken. Die Schlitze 16 sind wechselseitig angeordnet, d.h. jeweils ein an der Vorderseite angeordneter Schlitz folgt auf einen auf der Rückseite angeordneten Schlitz. Die Teillänge 1 der Schlitze 16 ist größer als die Hälfte der Axiallänge, so daß die von der Vorderseite und der Rückseite verlaufenden Schlitze 16 auf einer Strekke s nebeneinander verlaufen. Auf diese Weise erhält der Zentrierring 9 eine radiale Elastizität und ist somit in der Lage, Toleranzen in der zentralen Öffnung 13 des Werkzeugs 6 auszugleichen.

Fig. 3 zeigt einen Ausschnitt des Nabenteils 4 des Werkzeugträgers 1 mit einem daran befestigten Werkzeug 6. Das Werkzeug 6 besitzt ebenso wie in Fig. 2 eine zentrale Öffnung 13 mit einer Konusfläche 14. Auf dem zylindrischen Abschnitt 8 des Nabenteils 4 ist ein Zentrierring 17 angeordnet, der an seiner Mantelfläche eine in Axialrichtung gesehen gerundete Form 18 besitzt. Diese gerundete Form 18 kann beispielsweise ballig, bombiert, kugelabschnittförmig oder dgl. sein. Aufgrund dieser Form ergibt sich eine nur geringe Anlagefläche zwischen Zentrierring 17 und Werkzeug 6, wodurch sich ebenfalls eine gute Zentrierung ergibt. Ebenso wie in Fig. 2 ist auch der Zentrierring 17 von einer Feder 12 belastet.

Der Werkzeugträger 1 in Fig. 4 besitzt ein Nabenteil 4 mit einem konischen Vorsprung 19, der in die zentrale Öffnung 13 des Werkzeugs 6 eingreift. Die zentrale Öffnung 13 des Werkzeugs 6 ist stufenförmig ausgebildet, wobei in der Stufe 20 ein begrenzt verschiebbarer Zentrierring 21 angeordnet ist. Der Zentrierring 21 ist an seiner äußeren Mantelfläche 22 zylindrisch geformt, wobei an der Mantelfläche 22 ein Absatz 23 zur Anlage an einem Sicherungsring 24 vorgesehen ist. Die innere Mantelfläche 25 des Zentrierringes 21 ist konisch ausgebildet, wobei der Konuswinkel demjenigen des Vorsprunges 19 entspricht. Der Zentrierring 21 besitzt über den Kreisumfang verteilt mehrere Sackbohrungen 26, in denen Federn 27 angeordnet sind, durch welche der Zentrierring 21 gegen den Sicherungsring 24 belastet wird.

Die in den vorstehenden Ausführungsbeispielen beschriebenen Zentrierringe bestehen vorzugsweise aus Stahl, es können jedoch auch andere Werkstoffe mit entsprechenden Eigenschaften in Betracht gezogen werden. In den Ausführungsbeispielen sind die Federn, welche die Zentrierringe belasten, als Schraubenfedern dargestellt. Es können jedoch, sofern die Vertiefungen entsprechend ausgestaltet sind, auch Tellerfedern zum Einsatz kommen.

## Ansprüche

1. Werkzeugträger für Rotationswerkzeuge, insbesondere für Kreissägeblätter, Zerspaner usw., mit einer Spannvorrichtung, durch die das Werkzeug an einer Flanschfläche des Werkzeugträgers befestigt ist und das Werkzeug eine zentrale Öffnung besitzt, in die ein Ansatz des Werkzeugträgers eingreift,
dadurch gekennzeichnet, daß zwischen dem Ansatz (8; 19) des Werkzeugträgers (1) und dem Werkzeug (6) ein Zentrierring (9; 17; 21) angeordnet ist.
2. Werkzeugträger nach Anspruch 1,
dadurch gekennzeichnet, daß der Zentrierring elastisch ausgebildet ist.
3. Werkzeugträger nach Anspruch 1 oder 2,
dadurch gekennzeichnet, daß der Zentrierring (9; 17; 21) elastisch gelagert ist.
4. Werkzeugträger nach Anspruch 3,
dadurch gekennzeichnet, daß der Zentrierring (9; 17; 21) begrenzt axial verschieblich gelagert ist.
5. Werkzeugträger nach Anspruch 4,

dadurch gekennzeichnet, daß der Zentrierring (9; 17) auf einem zylindrischen Abschnitt (8) des Werkzeugträgers (1) angeordnet ist, wobei der Zentrierring (9; 17) auf seiner dem Werkzeugträger (1) zugewandten Seite von mindestens einer Feder (12) beaufschlagt und auf der anderen Seite von einem Sicherungsring (15) gehalten ist.

6. Werkzeugträger nach Anspruch 5,
dadurch gekennzeichnet, daß der Zentrierring (9) mit einer konischen Mantelfläche (10) oder mit einer in axialer Richtung gerundeten Form (18) ausgeführt und die zentrale Öffnung (13) des Werkzeuges (6) konisch mit einem zur Flanschfläche (5) des Werkzeugträgers (1) hin öffnenden Konuswinkel gestaltet ist.

7. Werkzeugträger nach Anspruch 4,
dadurch gekennzeichnet, daß der Zentrierring (21) in der zentralen Öffnung (13) des Werkzeugs (6) angeordnet ist, wobei der Zentrierring (21) in Richtung auf den Werkzeugträger (1) von mindestens einer Feder (27) vorzugsweise einer Schrauben- oder Tellerfeder (12 bzw. 27) beaufschlagt und der axiale Verschiebeweg durch einen Sicherungsring (24) begrenzt ist.

8. Werkzeugträger nach Anspruch 7,
dadurch gekennzeichnet, daß der Zentrierring (21) eine konische Bohrung (25) mit zur Flanschfläche (5) hin öffnenden Konuswinkel aufweist und der Werkzeugträger (1) einen konischen Vorsprung (19) besitzt, der in den Zentrierring (21) eingreift.

9. Werkzeugträger nach einem der Ansprüche 2 bis 8,
dadurch gekennzeichnet, daß der vorzugsweise aus Stahl bestehende Zentrierring (9) mindestens einen in axialer Richtung verlaufenden Schlitz (16) aufweist.

10. Werkzeugträger nach Anspruch 9,
dadurch gekennzeichnet, daß im Zentrierring (9) mehrere Schlitze (16) vorhanden sind, die sich lediglich über eine Teillänge (1) der Axiallänge (L) des Zentrierringes (9) erstrecken, wobei vorzugsweise die Schlitze (16) wechselweise an der Vorderseite und Rückseite des Zentrierringes (9) angeordnet sind und die Teillänge (1) größer als die Hälfte der Axiallänge (L) ist.

Fig.1

Fig. 2

Fig. 4

Fig. 3